# EUROPEAN PATENT APPLICATION

(11) **EP 2 299 670 A1**
(43) Date of publication of application: **23.03.2011**
(21) Application number: 08773068.5
(22) Date of filing: 01.07.2008
(51) Int. Cl.: H04M 3/42

(54) **METHOD AND NETWORK UNIT FOR REALIZING CUSTOMIZED VIDEO SERVICE IN IMS NETWORK**

(71) Applicant: Lucent Technologies Inc., Murray Hill, NJ 07974-0636 (US)
(72) Inventor: ZHAO, Jihong, Qingdao City Shandong 266101 (CN); SUN, Yi, Qingdao City Shandong 266101 (CN); LIAO, Hui, Qingdao City Shandong 266101 (CN); LUO, Yutang, Qingdao City Shandong 266101 (CN); XU, Haibin, Qingdao City Shandong 266101 (CN)
(74) Representative: MERH-IP Matias Erny Reichl Hoffmann
(86) International application number: PCT/CN2008/071504
(87) International publication number: WO 2010/000106

(57) **Abstract**

The present invention proposes a method for implementing a customized video service in IMS networks and a network element for controlling sessions between terminals, wherein a first terminal is calling a second terminal under the control of a first network element, and the second terminal has subscribed a customized video service provided by a second network element. The method comprises: the first network element transmits to the second network element a message of requesting for playing video to the first terminal which includes media information about the first terminal, after having known that the second terminal has the customized video service; the second network element transmits to the first network element an acknowledgement with information on the video to be played, if it determines that the first terminal supports the format of video to be played based on the media information about the first terminal; the first network element transmits to the second network element a message with information on the customized video service, and transmits to the first terminal a reply with the media information of video to be played after having received from the second network element a response with the media information of video to be played; and a media path is established between the first terminal and the second network element, thereby the video customized by the second terminal being played to the first terminal, and the call request sent by the first terminal while calling the second terminal is forwarded to the second terminal by the first network element.

## Description

### Field of the Invention

The present invention relates to the field of communications, and more particularly to implementing customized video service in IMS networks.

### Background of the Invention

The IMS (IP Multimedia Subsystem) defined by 3GPP is a new kind of multimedia service. It can meet the requirement of current terminal users on newer and more diverse multimedia services. In present, the IMS is a core technique of the next generation network and an important way of implementing Fixed-Mobile Convergence and introducing diversified services such as triple play of voice, data and video.

The architecture of IMS mainly includes:
- Home Subscriber Server (HSS) for storing users' subscription information and location information and preserving customized data used to handle multimedia session and related to users including local information, confidentiality information (authentication and authorization information), registration information, service triggering information, user's personal information and S-CSCF assigned to users etc.;
- Call session control function ( CSCF ) mainly responsible for processing IP signaling in the course of multimedia call session, the functionality of which comprises multimedia session control, address translation and service transfer for service negotiation etc., the CSCF being further divided into Proxy CSCF (P-CSCF), Interrogating CSCF (I-CSCF) and Serving CSCF (S-CSCF), wherein the P-CSCF is the first contact point in the IMS and forwards received SIP (Session Initiation Protocol) messages between user devices and the S-CSCF, and the S-CSCF is the center node on the SIP signaling plan and performs session control service for user devices, decides whether the application server needs to receive information about an incoming SIP session request for service control, downloads user service configuration information from the HSS and selects a corresponding type of application server as a function of a specific service application in order to offer service(s) required by a user;
- Application server (AS) for performing all of IMS service logics for IMS users, which is connected to the S-CSCF via an IMS SIC interface conforming to SIP standard compatible with IMS, wherein all of the IMS services run and are controlled in the AS, and the S-CSCF will invoke the AS as long as it checks a user's service profile and finds that he has IMS services, each IMS service being assigned a valid AS name/address in the service profile.

In recent years, many new mobile value-added services have been developed, one of which is Coloring Ring Back Tone (CRBT). A user may customize his personal ring back tone according to his own preference and requirement. Other calling users will hear the user's customized personal ring back tone while calling that user, instead of monotonous ring back tone. Currently, a user can customize his personal ring back tone for example by replacing the ring back tone with such an audio as a popular song. However, only the audio service may not meet the users' requirement on multimedia applications in IMS networks.

### Summary of the Invention

In order to alleviate the defect in prior art, according to an aspect of the present invention, a method for implementing a customized video service in IMS networks is proposed, wherein a first terminal is calling a second terminal under the control of a first network element, and the second terminal has subscribed a customized video service provided by a second network element. The method comprises: the first network element transmits to the second network element a message of requesting for playing video to the first terminal which includes media information about the first terminal, after having known that the second terminal has the customized video service; the second network element transmits to the first network element an acknowledgement with information on the video to be played, if it determines that the first terminal supports the format of video to be played based on the media information about the first terminal; the first network element transmits to the second network element a message with information on the customized video service, and transmits to the first terminal a reply with the media information of video to be played after having received from the second network element a response with the media information of video to be played; and a media path is established between the first terminal and the second network element, thereby the video customized by the second terminal being played to the first terminal, and the call request sent by the first terminal while calling the second terminal is forwarded to the second terminal by the first network element.

According to another aspect of the present invention, a network element used in the IP Multimedia Subsystem for controlling sessions between terminals is proposed, wherein the first terminal is calling the second terminal under the control of the network element, and the second terminal has subscribed the customized video service provided by another network element. The network element includes: first message generation and transmission means for generating and transmitting to said another network element a message of requesting for playing video to the first terminal which includes media information about the first terminal, after having known that the second terminal has the customized video service; second message generation and transmission means for generating and transmitting to the another network element a message with information on the customized video service upon receiving from the another network element an acknowledgement with information on the video to be played; and media path establishment means for establishing a media path between the first terminal and the another network element upon receiving a response from the another network element and after transmitting a reply to the first terminal.

### Brief Description of the Drawings

These and many other features and advantages of the present invention will become apparent from the following description of the embodiments of the present invention with reference to the drawings, wherein:
- Fig.1 shows an IMS network, in which two telephone terminals are controlled respectively by two different S-CSCFs;
- Fig.2 is a signaling flowchart illustrating the process of implementing the customized video service according to the present invention;
- Fig.3 is a flowchart of the method for implementing the customized video service according to an embodiment of the present invention;
- Fig.4 shows another IMS network, in which two telephone terminals are controlled by one S-CSCF; and
- Fig.5 is a block diagram of the network element according to an embodiment of the present invention.

### Detailed Description of the Invention

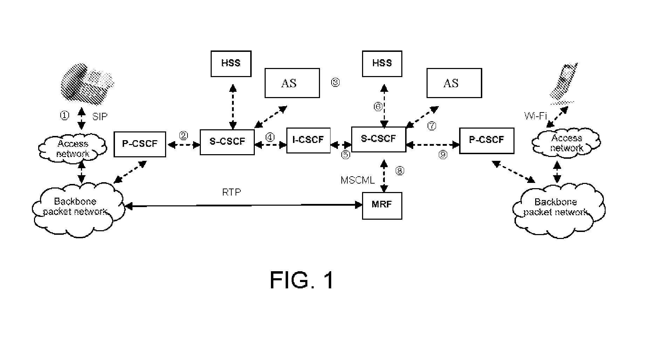

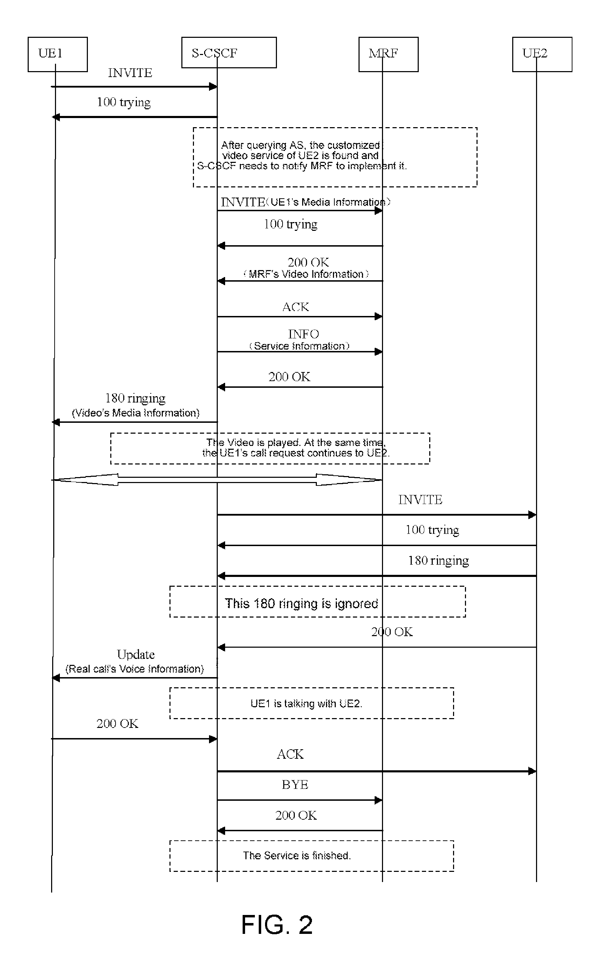

The present invention proposes a method for implementing the customized video service in IMS networks. The basic idea of the present invention will be explained below with reference to Fig.1 and Fig.2.

In the IMS network of Fig.1, two telephone terminals, i.e. a landline telephone and a mobile telephone, are controlled respectively by two S-CSCFs. When the landline telephone sends out a SIP call request (INVITE, in which indicates the supported video code) (①), the call request will firstly be sent to the access network, and then forwarded to the P-CSCF by the access network. The P-CSCF forwards the request to the S-CSCF, and the request finally arrives at the AS successively via the S-CSCF and the HSS (②). Afterwards, it is found out that the callee UE2 is controlled by another S-CSCF (③). Then, the S-CSCF forwards the call request to the correct I-CSCF (④), and the I-CSCF forwards the call request to a S-CSCF which controls UE2 (⑤). In the network of the callee, the S-CSCF queries the HSS about UE2 (⑥), and queries the AS and thus finds that the callee UE2 has subscribed the customized video (Ring Back Video) service (⑦). Therefore, the S-CSCF of the callee interacts with the MRF (Media Resource Function) through a SIP message with a MSCML (Media Server Control Markup Language) body in accordance with the information about the service provided by the AS (⑧). Finally, a RTP media path can be established between the caller and the MRF, and the user of the UE1 can thus see the video customized by the UE2. At the same time, the S-CSCF of the callee continues to forward the call request to the P-CSCF of UE2 (⑨). Once the user of UE2 decides to answer the call, the S-CSCF of the callee transmits a BYE message to the MRF in order to terminate the video session. The real call will be set up between the two users.

The interaction (⑧) between the S-CSCF of the callee and the MRF is illustrated in the flowchart of Fig.2. As shown in Fig.2, the S-CSCF of the callee queries the AS after having received a call request (INVITE) from the caller UE1. If it finds out that the callee has the customized video service, then it informs the MRF, i.e. transmitting an INVITE message with the media information, such as the video format supported by the terminal of the caller etc., of the caller to the MRF. The format of INVITE may be for example as following:

| |
|---|
| INVITE sip:ivr@mrf.voip-net.alcatel.fr SIP/2.0 |
| Via: SIP/2.0/UDP 135.2.51.6:5002;branch=z9hG4bK-4829-1-1 |
| From: sipp <sip:sipp@voip-net.alcatel.fr>;tag=1 |
| To: sut <sip:ivr@mrf.voip-netalcate1.fr> |
| Contact: <sip:sipp@135.2.51.6:5002> |
| Max-Forwards: 70 |
| Call-ID: SDSC.20071101.065622.2@135.2.167.68 |
| CSeq: 1 INVITE |
| Allow: INVITE, ACK, CANCEL, OPTIONS, BYE, REFER, NOTIFY, MESSAGE, SUBSCRIBE, INFO |
| Supported: eventlist |
| User-Agent: sipp |
| Content-Type: application/sdp |
| Accept: application/SDP, application/mediaservercontrol+xml, application/dtmf-relay |
| Route: <sip:135.2.51.6:5001;1r> |
| User-Agent: ImsClient_1.3.0.1620 |
| Allow: INVITE, ACK, CANCEL, OPTIONS, BYE, PRACK, UPDATE, REFER, SUBSCRIBE, NOTIFY, MESSAGE |
| Supported: replaces |
| Content-Length: 204 |
| v=0 |
| o=LUSIPPhone 0 0 IN IP4 135.252.136.111 |
| s=- |
| c=IN IP4 135.252.136.111 |
| t=0 0 |
| m=audio 6992 RTP/AVP 0 98 97 101 1 |
| a=rtpmap:0 PCMU/8000 |
| a=rtpmap:98 iLBC/8000 |
| a=rtpmap:97 speex/8000 |
| a=fmtp:101 0-15 |

Then, the MRF returns a 200 OK message with the video information of the MRF to the S-CSCF as acknowledgement, in case of determining a match with the media configuration of the caller's terminal. The format of 200 OK may be for example as following:

| |
|---|
| SIP/2.0 200 Ok |
| Via: SIP/2.0/UDP 135.2.51.6:5002;branch=z9hG4bK-4829-1-1 |
| From: sipp <sip:sipp@voip-net.alcatel.fr>;tag=1 |
| To: sut <sip:ivr@mrf.voip-net.alcatel.fr>;tag=0082-000001f9-0372i0 |
| Call-ID: SDSC.20071101.065622.2@135.2.167.68 |
| CSeq: 1 INVITE |
| Contact: sip:139.54.128.58:5061 |
| Allow: INVITE, ACK, BYE, CANCEL, UPDATE |
| Supported: timer |
| Content-Type: application/sdp |
| Content-Length: 136 |
| v=0 |
| o=- 4194687284 4194687284 IN IP4 139.54.128.58 |
| s=- |
| c=IN IP4 139.54.128.58 |
| t=0 0 |
| m=audio 35052 RTP/AVP 0 |
| a=rtpmap:0 PCMU/8000 |

It should be noted that, if the MRF finds out that there is not such a match with the media configuration of the caller's terminal, then it will return for example a BYE message to the S-CSCF.

After having received the 200 OK from the MRF, the S-CSCF transmits an INFO message with service information to the MRF. The format of INFO may be for example as following:

| |
|---|
| INFO sip:139.54.128.58:5061 SIP/2.0 |
| Via: SIP/2.0/UDP 135.2.51.6:5002;branch=z9hG4bK-4829-1-8 |
| From: sipp<sip:sipp@voip-net.alcatel.fr>;tag=1 |
| To: sut <sip:ivr@mrf.voip-net.alcatel.fr>;tag=0082-000001f9-0372i0 |
| Call-ID: SDSC.20071101.065622.2@135.2.167.68 |
| CSeq: 2 INFO |
| Contact: <sip:135.2.51.6:5002;transport=UDP> |
| Content-Type: application/mediaservercontrol+xml |
| Max-Forwards: 70 |
| Supported: timer |
| User-Agent: Lucent-HPSS v3.0.3 |
| Content-Length: 435 |
| <?xml version=" 1.0" encoding="utf-8"?> |
| <MediaServerControl version=" 1.0"> |
| <request> |
| <play id="0"> |
| <prompt> |
| <audio url="http://www.videoCamp.com/watch?v=myvideo&feature=play"/> |

After having received the INFO from the S-CSCF, the MRF returns a 200 OK to the S-CSCF as acknoledgement. Next, the S-CSCF transmits a 180 ringing message with video media information to the caller UE1. Thereby, the RTP media path between the UE1 and the MRF is established, and the video customized by the callee is played on the terminal of the caller. Meanwhile, the call request INVITE sent by the UE1 to the UE2 continues to the UE2. It should be noted that, at this moment, the S-CSCF will ignore the 180 ringing message from the UE2. After the S-CSCF having received the 200 OK from the UE2, i.e. after the user of UE2 having picked up the phone, the S-CSCF will transmit to the UE1 an UPDATE message with voice information of the real call, and this message terminates also the playing of video. The UE1 returns a 200 OK message after receiving the UPDATE message, and the S-CSCF transmits an ACK acknowledgement message to the UE2 after receiving the 200 OK. At this moment, the conversation between the UE1 and the UE2 begins. Then, the S-CSCF transmits a BYE message to the MRF to terminate the RTP media path, i.e. terminating the service. The MRF returns a 200 OK message as acknowledgement after receiving the BYE. Till now, the customized video service ends up.

It should be noted that, Fig.2 shows only the case in which the callee UE2 is idle. If the callee UE2 is busy while implementing the customized video service, then the customized video service will still be played to the caller. At the same time, the call request INVITE sent by the UE1 to the UE2 continues to the UE2, and the UE2 returns "486 busy here" to the S-CSCF. The S-CSCF transmits "486 busy here" to the caller while transmitting a BYE message to the MRF to terminate this service.

Therefore, as described above, the present invention proposes a mechanism for implementing a customized video service in IMS networks. Thanks to this mechanism, the operator can provide users in IMS networks with such services as: users could show their personal video with voice and moving images recorded by a DV or the video they prefer, or could provide default advertisement video, the operator could get revenue through providing advertisement video.

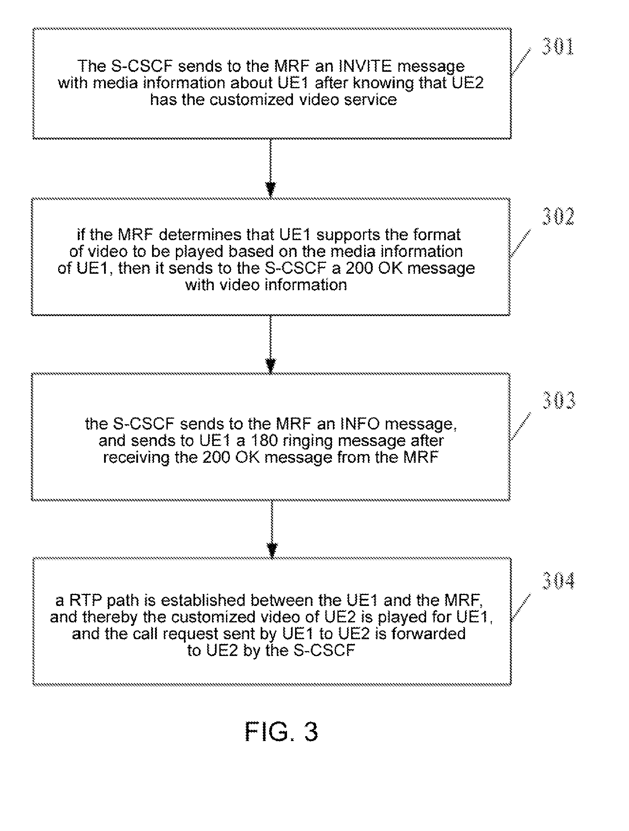

The method for implementing the customized video service in IMS networks according to an embodiment of the present invention will be discussed below with reference to Fig.3, wherein provided that a first terminal is calling a second terminal under the control of a first network element, and the second terminal has subscribed the customized video service provided by a second network element.

As shown in Fig.3, firstly, in step 301, the first network element transmits to the second network element a message of requesting for playing video to the first terminal which includes media information about the first terminal, after having known that the second terminal has the customized video service. Herein, the first network element may be for example the S-CSCF in Fig.2, the second network element may be for example the MRF in Fig.2, the first terminal may be for example the caller UE1 in Fig.2, the second terminal may be for example the callee UE2 in Fig.2, and the message of requesting for playing video to the first terminal may be for example an INVITE message conforming to the MSCML protocol.

In the present embodiment, the process of interacting between the first network element and the second network element so as to play video to the first terminal may employ any of existing and future solutions, standards, specifications etc., for example non-exclusively the above mentioned MSCML protocol. More particularly, the S-CSCF of the callee UE2 queries the AS after having received the call set up request from the caller UE1, and transmits to the MRF an INVITE message with the media information of UE1 upon knowing that the UE2 has subscribed the customized video service, the media information being for example the video format supported by the UE1.

Next, in step 302, the second network transmits to the first network element an acknowledgement with information on video to be played if it determines that the first terminal supports the format of video to be played based on the media information about the first terminal. Herein, the acknowledgement with information on video to be played may be for example a 200 OK message conforming to the MSCML protocol. More particularly, if the MRF determines that the media information of UE1 is matched, then it will return to the S-CSCF a 200 OK message with information on the video to be played. It should be noted that, in practice, if the MRF determines that the media information of UE1 is not matched, then it may return to the S-CSCF a BYE message to terminate this service.

Next, in step 303, the first network element transmits to the second network element a message with information on the customized video service, and transmits to the first terminal a reply with the media information of video to be played after having received from the second network element a response with the media information of video to be played. Herein, the message with information on the customized video service may be for example an INFO message conforming to the MSCML protocol, the response with the media information of video to be played may be for example a 200 OK message conforming to the MSCML protocol, and the reply with the media information of video to be played may be for example a 180 ringing message conforming to the SIP protocol, wherein the media information of video to be played maybe for example the coding information of concerned video etc.. More particularly, the S-CSCF transmits to the MRF an INFO message with service information after having received a 200 OK message from the MRF, and transmits to the UE1 a 180 ringing message with the media information of video to be played after receiving from the MRF a 200 OK message with the media information of video to be played.

Finally, in step 304, a media path is established between the first terminal and the second network element, thereby the video customized by the second terminal being played to the first terminal, and the call request sent by the first terminal while calling the second terminal is forwarded to the second terminal by the first network element. Herein, the media path may be for example the media path conforming to the RTP protocol. More particularly, in the present embodiment, a RTP media path is established between the UE1 and the UE2, thereby the video customized by the UE2 being played to the UE1, and the INVITE message sent by the UE1 while calling the UE2 is forwarded to the UE2 by the S-CSCF.

Afterwards, the call is set up between the UE1 and the UE2 according to the normal SIP calling procedure, but the S-CSCF will ignore the 180 ringing message sent by the UE2. In addition, after setting up the call between the UE1 and the UE2, the S-CSCF transmits the MRF a BYE message to terminate this video service.

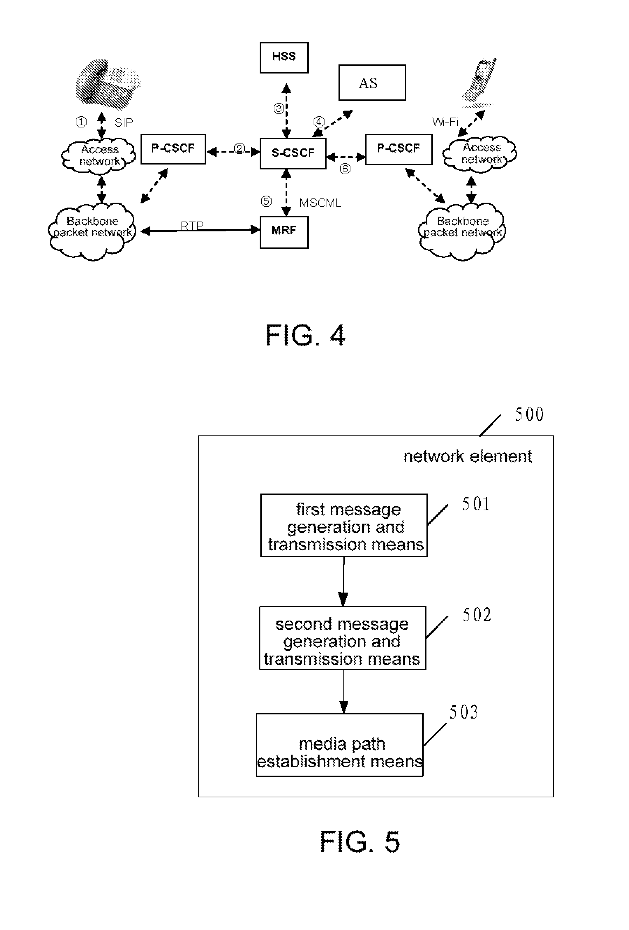

The embodiment as described above with reference Fig.3 represents a case in which the UE1 and UE2 are under the control of two different S-CSCFs (the IMS network in Fig.1). Fig.4 shows another embodiment according to the present invention, i.e. the UE1 and UE2 are controlled by one and the same S-CSCF.

The process of implementing the customized video service according to the situation shown in Fig.4 is substantially the same as the process described in connection with Fig.2. The difference is in that the S-CSCF will interact directly with the MRF as described above if it knows that the UE2 has subscribed the customized video service by querying the AS, after finding that the UE2 is controlled by itself through querying the HSS (③). That is to say, in the situation of Fig.4, it is not necessary to perform the steps ④ and ⑤ of Fig.2. However, the signaling interaction between the S-CSCF and the MRF is the same as shown in Fig.2.

It is therefore can be seen that, with the method for implementing a customized video service in IMS networks of the present invention, the operator can provide users in IMS networks with such services as: users could show their personal video with voice and moving images recorded by a DV or the video they prefer, or could provide default advertisement video, the operator could get revenue through providing advertisement video.

Based on the same inventive concept, according to another aspect of the present invention, a network element for controlling sessions between terminals in IMS networks is proposed, which will be described in the following in connection with the drawings.

Fig.5 shows a network element 500 according to an embodiment of the present invention. The network element 500 includes first message generation and transmission means 501, second message generation and transmission means 502 and media path establishment means 503, wherein the first message generation and transmission means 501 is used to generate and transmit to another network element a message of requesting for playing video to the first terminal which includes media information about the first terminal, after having known that the second terminal has the customized video service. For example, when the UE1 is calling UE2, after the network element 500 having known the UE2 has the customized video service, the first message generation and transmission means 501 will generate an INVITE message with media information of the UE1 and transmit this message to the MRF, the media information being for example video format supported by the UE1. The second message generation and transmission means 502 is used to generate and transmit to said another network element a message with information on the customized video service upon receiving from said another network element an acknowledgement with information on the video to be played. For example, when the network element 500 receives a 200 OK message from the MRF, the second message generation and transmission means 502 will generate an INFO message with information on the customized video service and transmit this message to the MRF. The media path establishment 503 is used to establish a media path between the first terminal and said another network element upon receiving a response from said another network element and after transmitting a reply to the first terminal. For example, the network element 500 transmits a 180 ringing message to the UE1 after having received the 200 OK message with media information of video to be played from the MRF, and then the media path establishment 503 will establish a RTP path between the UE1 and the MRF.

In implementation, the network element 500 of this embodiment as well as the first message generation and transmission means 501, the second message generation and transmission means 502 and the media path establishment means 503 it includes, may be implemented in software, hardware or a combination of them. For example, those skilled in the art are familiar with a variety of devices which may be used to implement these components, such as micro-processor, micro-controller, ASIC, PLD and/or FPGA etc.. The respective components of the network element of this embodiment may also be implemented separately physically but interconnected operatively.

In operation, the network element for controlling sessions between terminals of the embodiment as described above in connection with Fig.5 can implement the method for implementing a customized video service in IMS networks as described above. By using this network element, the operator can provide users in IMS networks with such services as: users could show their personal video with voice and moving images recorded by a DV or the video they prefer, or could provide default advertisement video, the operator could get revenue through providing advertisement video.

Although the exemplary embodiments of the method for implementing the customized video service in IMS networks and the network element for controlling sessions between terminals are described above in detail, the above embodiments are not exhaustive, and those skilled in the art can make numerous changes and modifications within the spirit and scope of the present invention. Therefore, the present invention is not limited to those embodiments, the scope of which is defined only by the appended claims.

## Claims

1. A method for implementing a customized video service in IP multimedia subsystems, wherein, a first terminal is calling a second terminal under control of a first network element, and the second terminal has subscribed the customized video service provided by a second network element, **characterized by** comprising:
- the first network element transmitting to the second network element a message of requesting for playing video to the first terminal which includes media information about the first terminal, after having known that the second terminal has the customized video service;
- the second network element transmitting to the first network element an acknowledgement with information on the video to be played, if it determines that the first terminal supports the format of video to be played based on the media information about the first terminal;
- the first network element transmitting to the second network element a message with information on the customized video service, and transmitting to the first terminal a reply with the media information of video to be played after having received from the second network element a response with the media information of video to be played; and
- establishing a media path between the first terminal and the second network element, thereby the video customized by the second terminal being played to the first terminal, and the call request sent by the first terminal while calling the second terminal being forwarded to the second terminal by the first network element.

2. The method according to claim 1, wherein the first terminal and the second terminal are controlled by one and the same first network element.

3. The method according to claim 1 or 2, wherein the first terminal and the second terminal are controlled respectively by different first network elements, and the first network element controlling the second terminal interacts with the second network element so as to establish a media path between the first terminal and the second network element.

4. The method according to any of claims 1 to 3, wherein the first network element obtains information on the customized video service of the second terminal from an application server.

5. The method according to any of claims 1 to 4, wherein the media path is a media path conforming to the Real-Time Transport Protocol.

6. The method according to any of claims 1 to 5, wherein the message of requesting for playing video to the first terminal is an INVITE message conforming to the Media Server Control Markup Language protocol.

7. The method according to any of claims 1 to 6, wherein the acknowledgement with information on the video to be played is a 200 OK message conforming to the Media Server Control Markup Language protocol.

8. The method according to any of claims 1 to 7, wherein the message with information on the customized video service is an INFO message conforming to the Media Server Control Markup Language protocol.

9. The method according to any of claims 1 to 8, wherein the response with the media information of video to be played is a 200 OK message conforming to the Media Server Control Markup Language protocol.

10. The method according to any of claims 1 to 9, wherein the replay with the media information of video to be played is a 180 ringing message conforming to the Session Initiation Protocol.

11. The method according to any of claims 1 to 10, wherein the first network element is a Serving Call Session Control Function S-CSCF, and the second network element is a Media Resource Function MRF.

12. A network element used in IP Multimedia Subsystems for controlling sessions between terminals, wherein a first terminal is calling a second terminal under control of the network element, and the second terminal has subscribed a customized video service provided by another network element, **characterized by** comprising:
- first message generation and transmission means for generating and transmitting to said another network element a message of requesting for playing video to the first terminal which includes media information about the first terminal, after having known that the second terminal has the customized video service;
- second message generation and transmission means for generating and transmitting to said another network element a message with information on the customized video service upon receiving from said another network element an acknowledgement with information on the video to be played; and
- media path establishment means for establishing a media path between the first terminal and said another network element upon receiving a response from said another network element and after transmitting a reply to the first terminal.

13. The network element according to claim 12, wherein the network element obtains information on the customized video service of the second terminal from an application server.

14. The network element according to claim 12 or 13, wherein the media path is a media path conforming to the Real-Time Transport Protocol.

15. The network element according to any of claim 12 to 14, wherein the message of requesting for playing video to the first terminal is an INVITE message conforming to the Media Server Control Markup Language protocol.

16. The network element according to any of claim 12 to 15, wherein the message with information on the customized video service is an INFO message conforming to the Media Server Control Markup Language protocol.

17. The network element according to any of claim 12 to 16, wherein the response from said another network element is a 200 OK message with the media information of video to be played conforming to the Media Server Control Markup Language protocol, and the reply transmitted to the first terminal is a 180 ringing message conforming to the Session Initiation Protocol.

18. The network element according to any of claim 12 to 17, wherein the network element is a Serving Call Session Control Function S-CSCF, and said another network element is a Media Resource Function MRF.
